# EUROPÄISCHE PATENTSCHRIFT

(11) **EP 0 533 629 B1**
(45) Veröffentlichungstag und Bekanntmachung des Hinweises auf die Patenterteilung: **02.04.1997**
(21) Anmeldenummer: 92810720.0
(22) Anmeldetag: 21.09.1992
(51) Int. Cl.: F24F 7/08, F24F 12/00

(54) **Verfahren und Einrichtung zur Zufuhr von erwärmter Frischluft**
Method and device for supplying heated fresh air
Méthode et dispositif d'approvisionnement en air frais chauffé

(30) Priorität: 20.09.1991 CH 2806/91
(43) Veröffentlichungstag der Anmeldung: 24.03.1993
(73) Patentinhaber: WIBA, WINTSCH + BACH, CH-8953 Dietikon (CH)
(72) Erfinder: Wintsch, Werner, CH-8953 Dietikon (CH); Bach, Ursula, CH-8953 Dietikon (CH)
(74) Vertreter: Legland, Brynjulv

(56) Entgegenhaltungen:
- CH-A- 678 443
- DE-A- 3 310 569
- DE-A- 3 737 597

## Beschreibung

Die Erfindung betrifft eine Einrichtung gemäss dem Oberbegriff des ersten Patentanspruches.

Zum Belüften und Beheizen von gefangenen Räumen, wie Badezimmern und Küchen, wird die verbrauchte Luft einfach mittels eines Ventilators abgesaugt, wobei Frischluft oft aus Nebenräumen oder von aussen das enstandene Vakuum füllt. Bei diesem Vorgang findet gleichzeitig eine Temperaturreduktion statt, weil die im Raume vorhandene Luft Wärmeenergie enthält, die durch die Belüftung verlorengeht. Diese von der Beleuchtung, vom Badewasser oder vom Koch- oder Spülvorgang herrührende und an die Raumluft abgegebene Wärmeenergie strömt ungenutzt in die Umgebungsluft ausserhalb des Raumes oder des Hauses aus.

DE-A-33 10 569 (D2) offenbart eine Ausführung für nur mehrgeschössige Bauwerke, mit je einem Gebläse für die Zu- und die Abluft, wobei die Verbindung der einzelnen Rohrteile miteinander zur Verringerung des Raumbedarfes im Installationsschacht ausführlich beschrieben ist.

In der DE-A-37 37 597 (D1) ist eine Einrichtung mit einem Unterdruckgebläse für den Wärmeaustausch in einem Viehstall beschrieben. Dabei sind zwei koaxial angeordnete Rohre vorgesehen, an deren Auslass sich ein einziges Gebläse mit zwei Schaufelkränzen befindet, das zwischen zwei Blasrichtungen umschaltbar ist. Da die Einrichtung in erster Linie für einstückige Viehställe vorgesehen ist, ist sie von der Ausführung her nur für einstöckige Gebäude geeignet. Ausserdem erfüllt sie nicht die höheren Anforderungen, die in einem Wohn- oder Bürohaus bezüglich Einbau und Abzug von Gerüchen gestellt werden, da die Gerüche in Viehställen keine Rolle spielen.

CH-A-0 678 443 (D3) beschreibt einen Doppelzugschornstein aus zusammengesetzten Kanalbauelementen und deren Verbindung zur Zufuhr von Verbrennungsluft zu Heizungsanlagen.

Aufgabe der Erfindung ist die Schaffung einer Einrichtung, welche nicht die Nachteile der bestehenden Ausführungen aufweist und sowohl für ein- als auch für mehrstöckige Wohn- und Bürogebäude zur Be- und Entlüftung von Badezimmern und Küchen mit Wärmerückgewinnung geeignet ist.

Dabei ist ein möglichst weitgehender Luftaustausch in den zu belüftenden Räumen erwünscht

Diese Aufgabe wird durch die Merkmale im Kennzeichnungsteil des ersten Anspruches gelöst.

Ausführungsformen sind in den abhängigen Ansprüchen umschrieben.

Bei dieser Einrichtung wird die in der verbrauchten Luft vorhandene Wärmeenergie zur Raumheizung benutzt, wobei es wichtig ist, dass die verbrauchte Luft den Raum möglichst vollständig verlässt, so dass weder Feuchtigkeit noch Gerüche zurückbleiben.

Die Einrichtung ist zur Verwendung in Badzimmern und Küchen, vorgesehen.

Nachfolgend werden Ausführungsbeispiele des Gegenstands der Erfindung anhand der Zeichnung näher erläutert. Es zeigen:
- Fig. 1: einen Vertikalschnitt durch eine Badzimmerwand mit einem Luftschacht, und
- Fig. 2: wie Fig. 1, jedoch durch eine Küchenwand.

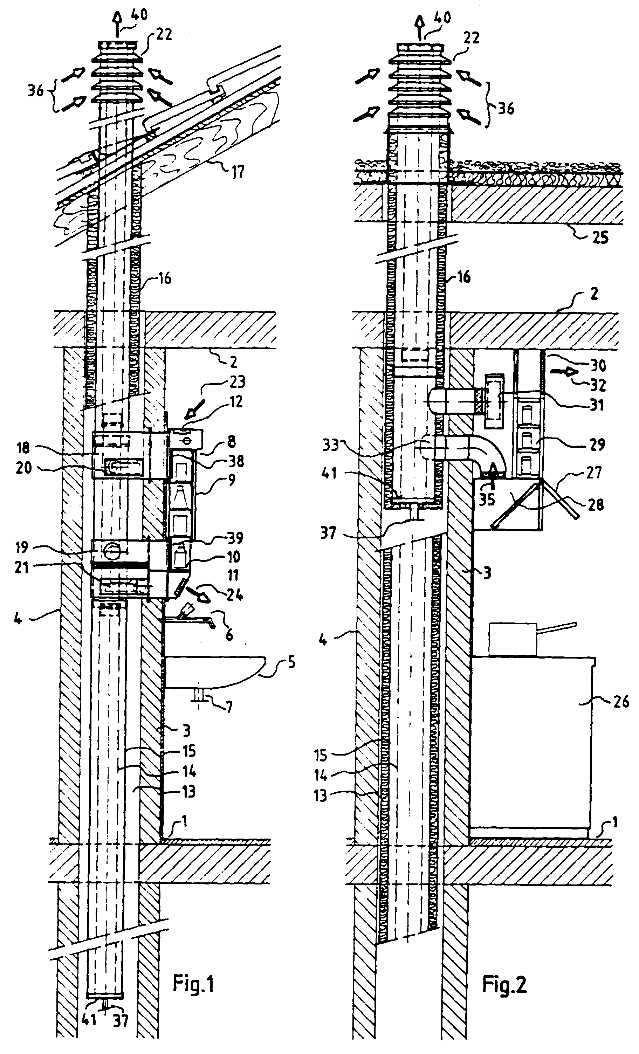

Fig. 1 zeigt ein Badzimmer mit einem Boden 1, einer Decke 2 sowie einer inneren Wand oder Vormauerung 3 und einer äusseren oder tragenden Wand, Rückwand oder Befestigungswand 4, die beide einen Lüftungsschacht 13 bilden. Im Badezimmer befindet sich ein Waschbecken 5 mit Wassereinlass 6 und Wasserauslass 7 sowie ein Spiegelschrank 8 mit einem Spiegel 9 und einem Tablar 10. Unterhalb des Tablars 10 befindet sich ein Körper, in dem ein Luftaustritt 11 mit Filter eingebaut ist. Zuoberst auf dem Schrank 8 ist ein möglichst mit der Beleuchtung kombinierter Lufteintritt 12 mit Filter für die Abluft eingebaut.

Im Lüftungsschacht 13 befinden sich zwei ineinander angeordnete Rohre 14 und 15, wobei das Rohr 14 vorzugsweise koaxial im Rohr 15 angeordnet ist. Diese beiden Rohre 14,15 haben meistens einen kreisförmigen Querschnitt, können aber auch jeden anderen beliebigen Querschnitt aufweisen und sind z.B. viereckig oder auch quadratisch. Der Schacht 13 erstreckt sich normalerweise durch die Anzahl der für diese Räume genutzten Stockwerke des Gebäudes von einer Stelle oberhalb des Flach- oder Schrägdaches 17 bis unterhalb des untersten be- und entlüfteten Raumes und endet dort mit einem Regenwassersammelstück 41.

Um den Wärmeverlust zu vermindern und die Geräusche zu dämpfen, sind die beiden Rohre von einer Wärme- und Schallisolation 16 umgeben, die lediglich im oberen Dachbereich angedeutet ist. Diese Isolation 16 kann ferner als Brand- und als Kondensatschutzisolation benutzt werden.

Eine Abluftvorrichtung 18 dient zum Wegtransport der verbrauchten, meistens sehr feuchten Luft in der Richtung des Pfeiles 23 aus dem Badezimmer, z.B. durch das Innenrohr 14. Dazu dienen passende Rohranschlüsse und ein Ventilator 18 mit Rückstauklappe, der entweder manuell oder automatisch einund ausgeschaltet wird. Der automatische Betrieb des Ventilators 20 mit Rückstauklappe wird z.B. von einem Lichtkontaktschalter mit Nachlaufrelais gesteuert.

Zur Zufuhr von Frischluft ist eine Frischluftzufuhrvorrichtung 19 vorgesehen, die ebenfalls mit einem Ventilator 21 mit Rückstauklappe ausgestattet ist und gleichzeitig mit der Abluftvorrichtung 18 gesteuert werden kann. Die Vorrichtung 19 bläst Frischluft in der Richtung des Pfeiles 24 in das Badezimmer.

Damit möglichst wenig Regenwasser in die Lüftung eindringt, ist für die Frischluft ein trichterartiger Rohrabschluss 22 am oberen Ende des Rohres auf dem Dach angeordnet, der eine Luftzufuhr etwa in radialer Richtung längs der Pfeile 36 ermöglicht. Die Abluft 39 wird senkrecht, um Vermischungen mit der Frischluft zu verhindern, nach oben ausgestossen. Das trotz dieser Massnahme eintretende Regenwasser sowie sich ansammelndes Kondenswasser fliessen durch die Rohre 14,15 nach unten und werden aus dem Sammelstück 41 mit einem Anschluss 37 dem Schmutzwasser zugeführt.

Damit keine Gerüche in die einzelne Wohnungen eindringen, sind Rückstauklappen auf die Ventilatoren 20,21 aufgebaut.

In Fig. 2 ist ein Schnitt durch eine Küche in einem Gebäude mit Flachdach 25 gezeigt, wobei in den beiden Figuren ein Schräg- 17 oder Flachdach 25 verwendet werden kann. Bei einer Küche geht es darum, die durch das Kochen verursachten Gerüche und Dämpfe abzuleiten und der Küche im Herdbereich Frischluft zuzuführen. Über dem Herd 26 befindet sich eine Haube oder Küchenabsaugvorrichtung 28 mit Abluftventilator herkömmlicher Art, wobei meistens eine verstellbare Klappe oder Auszugsvorrichtung 27 integriert ist. Oberhalb der Absaugvorrichtung 28 befindet sich z.B. ein in die Haubenwandung eingebauter Gewürzschrank 29, der zuoberst in eine atzslüftungsöffnung 30 übergeht, hinter der sich ein Ventilatoreinheit 31 befindet, der Frischluft in der Richtung des Pfeiles 32 durch die Öffnung 30 einbläst. Diese Öffnung 30 kann auch mit einem Filter versehen sein. Der Ventilator 31 saugt die Frischluft durch ein Rohr 33, das mit dem Ringraum zwischen den beiden, vorzugsweise koaxial ineinander angeordneten Rohren 14,15 verbunden ist. Etwa parallel zum Rohr 33 für die Frischluftzufuhr befindet sich ein Rohr 34 als Verbindung zwischen der Absaughaube und dem Innenrohr 14.

Bei der Ausführung gemäss Fig. 1 handelt es sich um Badezimmer, WCs oder andere Räume mit ähnlichen Lüftungsanlagen. Bei der Ausführung gemäss Fig. 2 handelt es sich um Küchen oder Räume mit ähnlichen Lüftungsanlagen, z.B. mit stark verschmutzter Luft.

Der Rohrabschluss 22 ist für zwei Rohre 14 und 15 vorgesehen und soll verhindern, dass die Abluft sofort wieder eingesaugt und dem Badezimmer oder der Küche zugeführt wird. Dies kann z.B. dadurch verbessert werden, dass die Geschwindigkeit der ausströmenden Luft am Dachdurchtritt erhöht, jedoch die Frischluft durch seitliche Öffnungen 36 zugeführt wird. Diese Anordnung verhindert ein Vermischen der Luftströme.

Der Wärmeaustausch findet zwischen den beiden Rohren 14 und 15 statt, indem die kalte, zwischen den beiden Rohren 14,15 fliessende Frichluft ihre Wärme dem Innenrohr 14 entzieht, das infolgedessen gekühlt wird und somit die einströmende Frischluft durch die Energie der ausströmenden Luft erwärmt. Damit der Wirkungsgrad des Wärmeaustauschers möglichst hoch ist, sind Leitbleche oder sonstige Metallkörper zwischen den beiden Rohren eingesetzt, welche die Oberflächen vergrössern und somit die Wärmeabgabe erhöhen.

An der Rückwand des Spiegelschrankes 8 oder einer sonstigen Einrichtung (Fig. 1) sind jeweils Revisionstüren 38,39 für die Ab- und die Frischluft vorgesehen. Diese Türen oder Deckel 38,39 können zur Reinigung oder zum Filteraustausch geöffnet oder abgeschraubt werden.

Bei der Ausführung für die Küche gemässs Fig. 2 wird vorzugsweise die Rückwand des Gewürzschrankes zecks Reinigung des Frischluftventilators 31 und der Rohrleitungen wegnehmbar gestaltet, so dass der Ausbau einfach und schnell durchführbar ist.

Vorangehend wurde davon ausgegangen, dass nur zwei Rohre, vorzugsweise koaxial, ineinander angeordnet sind, so dass zwei Kanäle mit kreisförmigem Querschnitt entstehen, von welchen der eine ringförmig ist. In diesem Falle wird die verbrauchte Luft durch den inneren und die Frischluft durch den äusseren Kanal mit kreisförmigem Querschnitt geleitet.

Der Anschluss 37 ist nicht syphoniert, da eine dauernde Füllung des Syphons nicht gewährleistet ist und somit Kanalgase in die Lüftungsanlage eindringen könnten, weshalb das Wasser durch einen im Gebrauch stehenden Syphon dem Abwasser zugeführt wird.

Zudem kann der Ringraum Leitbleche enthalten, welche die Luft z.B. schraubenlinienförmig um den inneren Kanal leiten.

Die Verwendung von Strömungshindernissen erfordert normalerweise eine höhere Leistung des Ventilators und kann evtl. zu nicht erwünschten Geräuschen führen. Zudem verlangt eine solche Ausführung häufiger eine Wartung als eine einfach ausgeführte Rohr- bzw. Doppelrohrleitung.

Ein Vorteil der vorliegenden Ausführung ist darin begründet, dass die Ventilatoren in einem schallisolierten Gehäuse liegen und deshalb sehr günstige Schallwerte erreicht werden können.

Als Rohre sind nicht nur solche mit kreisförmigem Querschnitt geeignet, sondern auch solche mit viereckigem Querschnitt. Der Querschnitt der Rohre wird vorzugsweise möglichst weitgehend demjenigen des Schachts angepasst.

Die beschriebene Einrichtung ist sowohl für Neu- als auch für Umbauten geeignet.

## Patentansprüche

1. Einrichtung mit Dachaustritt zur Be- und Entlüftung eines Badzimmers oder einer Küche in einem ein- oder mehrstöckigen Bürogebäude oder Wohnhaus durch Zufuhr von durch Wärmetausch mit der Abluft erwärmter Zuluft zwischen zwei ineinander angeordneten Rohren zur Trennung der Zu- von der Abluft, wobei der Luftauslass (11) für die Abluft und der Lufteinlass (12) für die Zuluft voneinander beabstandet an einem Wandschrank (8, 29) angeordnet sind, hinter dem sich die Gebläse (20,21) befinden, dass das innere Rohr (14) für die Abluft und der Ringraum zwischen den beiden Rohren (14, 15) für die Zuluft bestimmt sind, dass der Dachdurchtritt (22) seitliche Öffnungen (36) für die Zuluft in radialer Richtung und für die Abluft eine vertikale Öffnung (40) aufweist, **dadurch gekennzeichnet,** dass zwischen den Rohren (14,15) zur Erhöhung des Wärmeaustausches Leitblechen eingesetzt sind, und dass das untere Ende der Rohre (14,15) in einen Anschluss (37) für das Regenund Kondenswasser mündet, der mit dem Abwasserrohr von dem Waschbecken, dem Bad oder der Küchenspülung verbunden ist.

2. Einrichtung nach Anspruch 1, dadurch gekennzeichnet, dass die Gebläse (20,21) von einer gemeinsamen Steuervorrich-tung aus steuerbar sind.

3. Einrichtung nach Anspruch 1, dadurch gekennzeichnet, dass die Gebläse (20,21) von zwei getrennten Steuervorrichtungen aus steuerbar sind.

## Claims

1. Device with roof outlet for ventilation of a bath or a kitchen in an office or appartment building with one or several floors through supply of fresh air heated by the outflowing used air by means of an inner and an outer pipe placed in one another in order to separate the inflowing from the outflowing air, in which the intake (11) for the used air and the outlet for the fresh air (12) are arranged spaced from each other in a wall chest (8,29), behind which ventilators (20,21) are located, the inner pipe being reserved for the outflowing while the circular space between the two pipes (14,15) is reserved for the inflowing air, said roof outlet (22) being provided with side openings (36) for air supply in radial direction and with a vertical opening (40) for the outflowing or used air, characterized in that fins are arranged between the tubes (14,15) in order to increase the interchange of heat between the two air flows, and that the lower end of the tubes (14,15) discharge into an enclosure for rain and condensed water, which enclosure is connected with the waste water from the hand basin, the bath or the kitchen flush cleaning.

2. Device according to claim 1, characterized in that the ventilators (29,21) are controllable from a common control unit.

3. Device according to claim 1, characterized in that the ventilators (20,21) are controllable from two separate control units.

## Revendications

1. Dispositif avec chapeau de toiture, destiné à amener et à évacuer l'air d'une salle de bains ou d'une cuisine dans un bâtiment à usage de bureau ou d'habitation, à un seul ou à plusieurs étages, au moyen de l'arrivée d'air échauffé par l'air sortant, sous l'effet d'un échangeur de chaleur, entre deux tubes concentriques destinés à séparer l'air amené et l'air évacué, la sortie d'air (11) pour l'air évacué et l'entrée d'air (12) pour l'air amené distantes l'une par rapport à l'autre étant placées sur une armoire murale (8,29), derrière laquelle se trouve un ventilateur (20,21), de sorte que le tube intérieur (14) est destiné à'air évacué et la couronne entre les deux tubes (14,15) est destiné à l'air amené, de sort que le chapeau (22) présente des ouvertures latérales (36) dans le sens radial pour l'air amené, et une ouverture vertical (40) pour l'air évacué, caractérisé en ce que les tubes (14,15) sont dotés de tôles de conduction pour accroître l'échange de chaleur, et que l'extrémité inférieure des tubes (14,15) mène à un raccord (37) servant à collecter l'eau de pluie et l'eau de condensation, qui est relié au tuyau des eaux usées du lavabo, de la baignoire ou de l'évier.

2. Dispositif selon revendication 1, caractérisé en ce que le ventilateur (20,21) est commandé par une installation de commande commune.

3. Dispositif selon revendication 1, caractérisé en ce que le ventilateur (20,21) est commandé par deux installations de commande séparées.
